# EUROPÄISCHE PATENTSCHRIFT

(11) **EP 1 926 551 B1**
(45) Veröffentlichungstag und Bekanntmachung des Hinweises auf die Patenterteilung: **19.06.2019**
(21) Anmeldenummer: 06793227.7
(22) Anmeldetag: 05.09.2006
(51) Int. Cl.: B01J 2/02, B01J 2/18

(54) **VERFAHREN UND REAKTOR ZUR HERSTELLUNG VON POLYMERPARTIKELN DURCH VERTROPFEN VON FLÜSSIGKEITEN**
METHOD AND REACTOR FOR PRODUCING POLYMER-PARTICLES BY DROPPING LIQUIDS
PROCÉDÉ ET REACTEUR POUR PRODUIRE DES PARTICULES EN POLYMERS PAR FAIRE GOUTTER DES LIQUIDES

(30) Priorität: 14.09.2005 DE 102005044035
(43) Veröffentlichungstag der Anmeldung: 04.06.2008
(73) Patentinhaber: BASF SE, 67056 Ludwigshafen am Rhein (DE)
(72) Erfinder: DÜCKER, Carolin Nadine, 67063 Ludwigshafen (DE); LÖSCH, Dennis, 67122 Altrip (DE); SEIDL, Volker, 68163 Mannheim (DE)
(74) Vertreter: BASF IP Association
(86) Internationale Anmeldenummer: PCT/EP2006/066016
(87) Internationale Veröffentlichungsnummer: WO 2007/031441

(56) Entgegenhaltungen:
- BE-A- 700 776
- US-A- 3 952 078
- US-A- 5 256 362

## Beschreibung

Die vorliegende Erfindung betrifft ein Verfahren zum Vertropfen von Flüssigkeiten mittels einer Vertropferplatte, wobei zumindest die Unterseite der Vertropferplatte zumindest teilweise gegenüber der zu vertropfenden Flüssigkeit einen Kontaktwinkel von mindestens 60° aufweist, sowie die Verwendung des Verfahrens zur Herstellung wasserabsorbierender Polymerpartikel.

Wasserabsorbierende Polymere sind insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Herstellung der wasserabsorbierenden Polymere wird beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seiten 73 bis 103, beschrieben.

Die Eigenschaften der wasserabsorbierenden Polymere können über den Vernetzungsgrad eingestellt werden. Mit steigendem Vernetzungsgrad steigt die Gelfestigkeit und sinkt die Absorptionskapazität. Dies bedeutet, dass mit steigender Absorption unter Druck (AUL) die Zentrifugenretentionskapazität (CRC) abnimmt (zu sehr hohen Vernetzungsgraden nimmt auch die Absorption unter Druck wieder ab).

Zur Verbesserung der Anwendungseigenschaften, wie beispielsweise Flüssigkeitsleitfähigkeit (SFC) in der Windel und Absorption unter Druck (AUL), werden wasserabsorbierende Polymerpartikel im allgemeinen nachvernetzt. Dadurch steigt nur der Vernetzungsgrad der Partikeloberfläche, wodurch die Absorption unter Druck (AUL) und die Zentrifugenretentionskapazität (CRC) zumindest teilweise entkoppelt werden können. Diese Nachvernetzung kann in wässriger Gelphase durchgeführt werden. Vorzugsweise werden aber gemahlene und abgesiebte Polymerpartikel (Grundpolymer) an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen des hydrophilen Polymeren kovalente Bindungen bilden können.

Die Nachvernetzung wird in der Monographie "Modern Superabsorbent Polymer Technology", F.L. Buchholz und A.T. Graham, Wiley-VCH, 1998, Seiten 97 bis 103, beschrieben. Üblicherweise werden die wasserabsorbierenden Polymerpartikel mit dem Nachvernetzer benetzt und thermisch nachvernetzt, wobei die Polymerpartikel mittels heißer Luft oder mittels Kontakttrocknung erwärmt und gleichzeitig getrocknet werden. Um den Nachvernetzer gleichmäßig auf der Partikeloberfläche zu verteilen, wird der Nachvernetzer typischerweise in einem Lösungmittel, vorzugsweise Wasser oder einer wässrige Lösung, gelöst eingesetzt. Das Lösungsmittel wird üblicherweise nach der Nachvernetzung wieder entfernt.

Durch Sprühpolymerisation konnten die Verfahrensschritte Polymerisation und Trocknung zusammengefasst werden. Zusätzlich konnte die Partikelgröße durch geeignete Verfahrensführung in gewissen Grenzen eingestellt werden.

Die Herstellung wasserabsorbierender Polymerpartikel durch Sprühpolymerisation wird beispielsweise in EP-A-0 348 180, WO-A-96/40427, DE-A-103 14 466 sowie DE-A-103 40 253 beschrieben.

Die Reaktion kann auch in Apparaten durchgeführt werden in denen die Monomerlösung in Form monodisperser Tropfen frei fallen kann. Geeignet dazu sind Apparaturen, wie sie beispielsweise in der Patentschrift US-A-5,269,980, Spalte 3, Zeilen 25 bis 32, beschrieben sind. Die Polymerisation monodisperser Tropfen führt zu Polymerpartikeln mit enger Partikelgrößenverteilung.

Aufgabe der vorliegenden Erfindung war die Bereitstellung eines verbesserten Verfahrens zur Herstellung wasserabsorbierender Polymerpartikel mit enger Partikelgrößenverteilung, insbesondere mit einem niedrigen Anteil an kleinen Partikeln.

Gelöst wurde die erfindungsgemäße Aufgabe durch ein Verfahren zur Herstellung wasserabsorbierender Polymerpartikel durch Vertropfen wässriger Lösungen mittels einer Vertropferplatte und Polymerisation, dadurch gekennzeichnet, dass zumindest die Unterseite der Vertropferplatte zumindest teilweise gegenüber Wasser einen Kontaktwinkel von mindestens 60° aufweist und die vertropfte wässrige Lösung eine zu polymerisierende Monomerlösung ist.

Eine Vertropferplatte ist eine Platte mit mindestens einer Bohrung, wobei die Flüssigkeit von oben durch die Bohrung tritt. Die Vertropferplatte bzw. die Flüssigkeit wird in Schwingungen versetzt, wodurch an der Unterseite der Vertropferplatte eine monodisperse Tropfenkette erzeugt wird. Die Funktionsweise einer Vertropferplatte wird auch in US-5,269,980 in Spalte 3, Zeilen 37 bis 54, erläutert.

Die Anzahl der Bohrungen wird gemäß der gewünschten Kapazität und Tropfengröße ausgewählt. Die Vertropferplatte weist üblicherweise mindestens eine, vorzugsweise mindestens 10, besonders bevorzugt mindestens 50, und üblicherweise bis zu 10.000, vorzugsweise bis zu 5.000, besonders bevorzugt bis zu 1.000, Bohrungen auf, wobei die Bohrungen üblicherweise gleichmäßig über die Vertropferplatte verteilt sind, vorzugsweise in der sogenannten Dreiecksteilung, d.h. jeweils drei Bohrungen bilden die Ecken eines gleichseitigen Dreiecks.

Der Durchmesser der Bohrungen wird an die gewünschte Tropfengröße angepasst. Der Durchmesser der Bohrungen beträgt üblicherweise mindestens 50 µm, vorzugsweise mindestens 75 µm, besonders bevorzugt mindestens 100 µm, und üblicherweise bis zu 1.000 µm, vorzugsweise bis zu 600 µm, besonders bevorzugt bis zu 300 µm.

Es kann vorteilhaft sein die Vertropferplatte auf eine Trägerplatte aufzulegen, wobei die Trägerplatte ebenfalls Bohrungen aufweist. Dabei weisen die Bohrungen der Trägerplatte einen größeren Durchmesser auf als die Bohrungen der Vertropferplatte auf und sind so angeordnet, dass sich unter jeder Bohrung der Vertropferplatte eine konzentrische Bohrung der Trägerplatte befindet. Diese Anordnung ermöglicht einen schnellen Wechsel der Vertropferplatte, beispielsweise um Tropfen einer anderen Größe zu erzeugen. Ein derartiges System aus Vertropferplatte und Trägerplatte gilt als Vertropferplatte im Sinne dieser Erfindung, d.h. die Unterseite des Systems Vertropferplatte/Trägerplatte ist die Unterseite der Vertropferplatte.

Der Kontakwinkel ist ein Maß für das Benetzungsverhalten einer Flüssigkeit, insbesondere Wasser, gegenüber einer Oberfläche und kann mit üblichen Methoden bestimmt werden, beispielsweise gemäß ASTM D 5725. Ein niedriger Kontaktwinkel bedeutet eine gute und ein hoher Kontaktwinkel eine schlechte Benetzung.

Die Vertropferplatte weist gegenüber Wasser einen Kontaktwinkel von mindestens 60°, vorzugsweise mindestens 70°, besonders bevorzugt mindestens 80°, ganz besonders bevorzugt mindestens 90°, auf

Es ist aber auch möglich, dass die Vertropferplatte aus einem Material mit einem niedrigeren Kontaktwinkel gegenüber Wasser besteht, beispielsweise einem Stahl mit der Werkstoffnummer 1.4571, und mit einem Material mit einem größeren Kontaktwinkel gegenüber Wasser beschichtet wird.

Geeignete Beschichtungen sind beispielsweise fluorhaltige Polymere, wie Perfluoralkoxyethylen, Polytetrafluorethylen, Ethylen-Chlortrifluorethylen-Copolymere, Ethylen-Tetrafluorethylen-Copolymere und fluoriertes Polyethylen.

Die Beschichtungsmittel können als Dispersion auf das Substrat aufgebracht werden, wobei anschließend das Lösungsmittel abgedampft und getempert wird. Für Polytetrafluorethylen ist dies beispielsweise in US-3,243,321 beschrieben.

Weitere Beschichtungsverfahren sind zu finden unter dem Stichwort "Thin Films" in der elektronischen Version von "Ullmann's Encyclopedia of Industrial Chemistry" (Updated Sixt Edition, 2000 Electronic Release).

Weiterhin können die Beschichtungsmittel auch im Rahmen einer chemischen Vernickelung in die Nickelschicht eingebaut werden.

Infolge der schlechten Benetzbarkeit der Vertropferplatte werden monodisperse Tropfen mit enger Tropfengrößenverteilung erhalten.

Die gemäß dem erfindungsgemäßen Verfahren herstellbaren wasserabsorbierenden Polymerpartikel können durch Polymerisation einer Monomerlösung, enthaltend
a) mindestens ein ethylenisch ungesättigtes, säuregruppentragendes Monomer,
b) mindestens einen Vernetzer,
c) wahlweise mindestens ein mit dem Monomeren a) copolymerisierbares ethylenisch und/oder allylisch ungesättigtes Monomer und
d) wahlweise mindestens ein wasserlösliches Polymer, auf das die Monomere a), b) und ggf. c) zumindest teilweise aufgepfropft werden können,
hergestellt werden.

Geeignete Monomere a) sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure. Ganz besonders bevorzugt ist Acrylsäure.

Die Säuregruppen der Monomere a) sind üblicherweise teilweise neutralisiert, vorzugsweise zu 25 bis 85 mol-%, bevorzugt zu 27 bis 80 mol-%, besonders bevorzugt zu 27 bis 30 mol-% oder 40 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff in die Monomerlösung erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 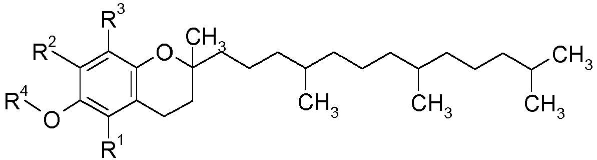 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt weniger als 130 Gew.-ppm, besonders bevorzugt weniger als 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt wird. Beispielsweise kann zur Herstellung der Monomerlösung eine Acrylsäure mit einem entsprechenden Gehalt an Hydrochinonhalbether verwendet werden.

Die Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A-0 530 438 beschrieben, Di- und Triacrylate, wie in EP-A-0 547 847, EP-A-0 559 476, EP-A-0 632 068, WO-A-93/21237, WO-A-03/104299, WO-A-03/104300, WO-A-03/104301 und in DE-A-103 31 450 beschrieben, gemischte Acrylate, die neben Acrylatgruppen weitere ethylenisch ungesättigte Gruppen enthalten, wie in DE-A-103 314 56 und der älteren deutschen Anmeldung mit dem Aktenzeichen 10355401.7 beschrieben, oder Vernetzermischungen, wie beispielsweise in DE-A-195 43 368, DE-A-196 46 484, WO-A-90/15830 und WO-A-02/32962 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin geeignete Vernetzer b) sind Pentaerythritoldi- Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 15-fach ethoxylierten Glyzerins, des 3- bis 15-fach ethoxylierten Trimethylolpropans, des 3- bis 15-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten propoxylierten Glyzerine wie sie beispielsweise in WO-A-03/104301 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins. Diese zeichnen sich durch besonders niedrige Restgehalte (typischerweise unter 10 Gew.-ppm) im wasserabsorbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf.

Die Menge an Vernetzer b) beträgt vorzugsweise mindestens 0,001 mol-%, besonders bevorzugt mindestens 0,01 mol-%, ganz besonders bevorzugt mindestens 0,1 mol-%, und vorzugsweise bis zu 10 mol-%, besonders bevorzugt bis zu 5 mol-%, ganz besonders bevorzugt bis zu 2 mol-%, jeweils bezogen auf das Monomer a).

Mit den Monomeren a) copolymerisierbare ethylenisch ungesättigte Monomere c) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die Konzentration der Monomeren a) in der Monomerlösung beträgt üblicherweise 2 bis 80 Gew.-%, vorzugsweise 5 bis 70 Gew.-%, besonders bevorzugt 10 bis 60 Gew.-%.

Die Löslichkeit der Monomeren a) in Wasser beträgt bei 23°C typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser.

Die bevorzugten Polymerisationsinhibitoren benötigen für eine optimale Wirkung gelösten Sauerstoff. Daher können die Polymerisationsinhibitoren vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Monomerlösung wird in Gegenwart von Initiatoren polymerisiert.

Die Initiatoren werden in üblichen Mengen eingesetzt, beispielsweise in Mengen von 0,001 bis 5 Gew.-%, vorzugsweise 0,01 bis 1 Gew.-%, bezogen auf die zu polymerisierenden Monomere.

Als Initiatoren können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten RedoxInitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Entsprechend der Produktanforderungen kann der pH-Wert der gemäß dem erfindungsgemäßen Verfahren herstellbaren Polymerpartikel über den pH-Wert der Monomerlösung auf den gewünschten Bereich eingestellt werden. Beispielsweise sollten Polymere für kosmetische Anwendungen üblicherweise einen pH-Wert von 5 bis 6 aufweisen.

Die Reaktion wird vorzugsweise in Gegenwart eines inerten Trägergases durchgeführt werden, wobei inert bedeutet, dass das Trägergas mit den Bestandteilen der Monomerlösung unter den Reaktionsbedingungen nicht reagiert. Das inerte Trägergas ist vorzugsweise Stickstoff. Der Sauerstoffgehalt des inerten Trägergases beträgt vorteilhaft unter 5 Vol.-%, vorzugsweise unter 2 Vol.-%, besonders bevorzugt unter 1 Vol.-%.

Das inerte Trägergas kann im Gleichstrom oder im Gegenstrom zu den frei fallenden Tropfen der Monomerlösung durch den Reaktionsraum geführt werden, bevorzugt im Gleichstrom. Vorzugsweise wird das Trägergas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1%.

Die Gasgeschwindigkeit wird vorzugsweise so eingestellt, dass die Strömung im Reaktor gerichtet ist, beispielsweise liegen keine der allgemeinen Strömungsrichtung entgegengesetzte Konvektionswirbel vor, und beträgt beispielsweise 0,02 bis 1,5 m/s, bevorzugt 0,05 bis 0,4 m/s.

Die Temperatur im Reaktionsraum beträgt vorzugsweise 70 bis 250°C, besonders bevorzugt 80 bis 190°C, ganz besonders bevorzugt 90 bis 140°C.

Die Reaktion kann im Überdruck oder im Unterdruck durchgeführt werden, ein Unterdruck von bis zu 100 mbar gegenüber dem Umgebungsdruck ist bevorzugt.

Die Polymerisationsgeschwindigkeit und die Trockengeschwindigkeit weisen üblicherweise unterschiedliche Temperaturabhängigkeiten auf. Dies kann beispielsweise bedeuten, dass die versprühten Tropfen trocknen bevor der gewünschte Umsatz erreicht worden ist. Daher ist es vorteilhaft die Reaktionsgeschwindigkeit und die Trockengeschwindigkeit getrennt zu beeinflussen.

Die Trockengeschwindigkeit kann über die relative Feuchte des Inertgases beeinflusst werden. Die relative Feuchte des Inertgases beträgt im allgemeinen weniger als 90%, vorzugsweise weniger als 60%, besonders bevorzugt weniger als 30%. Dabei ist die relative Feuchte der Quotient aus Wasserdampfpartialdruck und maximalem Wasserdampfpartialdruck (Sättigung) bei einer gegebenen Temperatur multpliziert mit 100%.

Die Polymeriationsgeschwindigkeit kann durch Art und Menge des verwendeten Initiatorsystems eingestellt werden.

Vorteilhaft zur Steuerung der Polymerisationsgeschwindigkeit ist die Verwendung von Azoverbindungen oder Redoxinitiatoren als Initiatoren. Das Anspringverhalten der Polymerisation läßt sich mit Azoverbindungen oder Redoxinitiatoren über Auswahl des Initiators, Initiatorkonzentration und Reaktionstemperatur besser steuern als beispielsweise mit reinen Peroxidinitiatoren.

Das Trägergas wird zweckmäßigerweise vor dem Reaktor auf die Reaktionstemperatur von 70 bis 250°C, vorzugsweise 80 bis 190°C, besonders bevorzugt 90 bis 140°C, vorgewärmt.

Besonders vorteilhaft sind Photoinitiatoren. Bei Verwendung von Photoinitiatoren kann die Trockengeschwindigkeit über die Temperatur auf den gewünschten Wert eingestellt werden, ohne dass damit gleichzeitig die Radikalbildung wesentlich beeinflusst wird. Die Photopolymerisation wird vorteilhaft durch UV-Lampen im oberen Bereich des Reaktors in der Nähe der Vertropferplatte gestartet.

Das Reaktionsabgas, d.h. das der Reaktionsraum verlassende Trägergas, kann beispielsweise in einem Wärmeaustauscher abgekühlt werden. Geeignete Wärmeaustauscher sind direkte Wärmeaustauscher, wie Wäscher, und indirekte Wärmeaustsauscher, wie Kondensatoren. Dabei kondensieren Wasser und nicht umgesetztes Monomer. Danach kann das Reaktionsabgas zumindest teilweise wieder aufgewärmt und als Kreisgas in den Reaktor zurückgeführt werden. Vorzugsweise wird das Kreisgas so abgekühlt, dass das abgekühlte Kreisgas den für die Reaktion gewünschten Anteil an Wasserdampf hat. Ein Teil des Reaktionsabgases kann ausgeschleust und durch frisches Trägergas ersetzt werden, wobei im Reaktionsabgas enthaltene nicht umgesetzte Monomere abgetrennt und rückgeführt werden können.

Besonders bevorzugt ist ein Wärmeverbund, dass heißt, ein Teil der Abwärme beim Abkühlen des Abgases wird zum Aufwärmen des Kreigases verwendet.

Die Reaktoren können begleitbeheizt werden. Die Begleitheizung wird dabei vorzugsweise so eingestellt, dass die Wandtemperatur mindestens 5°C oberhalb der Reaktorinnentemperatur liegt und die Kondensation an den Reaktorwänden zuverlässig vermieden wird.

Die erhaltenen Polymerpartikel können anschließend getrocknet und/oder nachvernetzt werden.

Geeignete Nachvernetzer e) sind Verbindungen, die mindestens zwei Gruppen enthalten, die mit den Carboxylatgruppen des Hydrogels kovalente Bindungen bilden können. Geeignete Verbindungen sind beispielsweise Alkoxysilylverbindungen, Polyaziridine, Polyamine, Polyamidoamine, Di- oder Polyglycidylverbindungen, wie in EP-A-0 083 022, EP-A-0 543 303 und EP-A-0 937 736 beschrieben, di- oder polyfunktionelle Alkohole, wie in DE-C-33 14 019, DE-C-35 23 617 und EP-A-0 450 922 beschrieben, oder ß-Hydroxyalkylamide, wie in DE-A-102 04 938 und US-6,239,230 beschrieben.

Desweiteren sind in DE-A-40 20 780 zyclische Karbonate, in DE-A-198 07 502 2-Oxazolidon und dessen Derivate, wie 2-Hydroxyethyl-2-oxazolidon, in DE-A-198 07 992 Bis- und Poly-2-oxazolidinone, in DE-A-198 54 573 2-Oxotetrahydro-1,3-oxazin und dessen Derivate, in DE-A-198 54 574 N-Acyl-2-Oxazolidone, in DE-A-102 04 937 zyklische Harnstoffe, in DE-A-103 34 584 bizyklische Amidacetale, in EP-A-1 199 327 Oxetane und zyklische Harnstoffe und in WO-A-03/031482 Morpholin-2,3-dion und dessen Derivate als geeignete Nachvernetzer beschrieben.

Mit dem Verfahren der vorliegenden Erfindung sind wasserabsorbierende Polymerpartikel erhältlich.

Die gemäß dem erfindungsgemäßen Verfahren herstellbaren wasserabsorbierenden Polymerpartikel weisen typischerweise eine Zentrifugenretentionskapazität (CRC) von mindestens 15 g/g, vorzugsweise mindestens 20 g/g, besonders bevorzugt mindestens 25 g/g, auf. Die Zentrifugenretentionskapazität (CRC) wird gemäß der von der EDANA (European Disposables and Nonwovens Association) empfohlenen Testmethode Nr. 441.2-02 "Centrifuge retention capacity" bestimmt.

Die gemäß dem erfindungsgemäßen Verfahren herstellbaren wasserabsorbierenden Polymerpartikel weisen typischerweise eine Absorption unter Druck von 0,3 psi (2,07 kPa) von mindestens 10 g/g, vorzugsweise mindestens 15 g/g, besonders bevorzugt mindestens 20 g/g, auf. Die Absorption unter Druck (AUL) wird gemäß der von der EDANA (European Disposables and Nonwovens Association) empfohlenen Testmethode Nr. 442.2-02 "Absorption under pressure" bestimmt.

Ein weiterer Gegenstand der vorliegenden Erfindung sind Verfahren zur Herstellung von Hygieneartikeln, insbesondere Windeln, umfassend die Verwendung gemäß dem erfindungsgemäßen Verfahren hergestellter wasserabsorbierender Polymerpartikel.

Es handelt sich dabei um Hygieneartikel, enthaltend eine absorbierende Schicht bestehend aus 50 bis 100 Gew.-%, vorzugsweise 60 bis 100 Gew.-%, bevorzugt 70 bis 100 Gew.-%, besonders bevorzugt 80 bis 100 Gew.-%, ganz besonders bevorzugt 90 bis 100 Gew.-%, erfindungsgemäss hergestellter wasserabsorbierender Polymerpartikel, wobei die Umhüllung der absorbierenden Schicht nicht berücksichtigt ist.

Ein weiterer Gegenstand der vorliegenden Erfindung sind Reaktoren zur Herstellung von Polymerpartikeln, umfassend
i) einen beheizbaren Reaktionsraum,
ii) mindestens eine Vertropferplatte zur Tropfenerzeugung im oberen Bereich des Reaktionsraumes i),
iii) mindestens eine Trägergaszuführung,
iv) mindestens eine Trägergasvorheizung,
v) mindestens eine Trägergasabführung und
vi) wahlweise mindestens ein Mittel zu Rückführung zumindest eines Teil des abgeführten Trägergases aus der Trägergasabführung v) zur Trägergaszuführung iii),
wobei zumindest die Unterseite der Vertropferplatte zumindest teilweise gegenüber Wasser einen Kontaktwinkel von mindestens 60° aufweist.

Der Abstand der Bohrungen voneinander beträgt vorzugsweise von 1 bis 100 mm, besonders bevorzugt von 2 bis 50 mm, ganz besonders bevorzugt von 5 bis 20 mm.

Die Dicke der Vertropferplatte wird so ausgewählt, dass die Vertropferplatte hinreichend mechanisch stabil ist aber gleichzeitig ausreichend schwingen kann.

Die Dicke der Vertropferplatte beträgt vorzugsweise 0,1 bis 2 mm, besonders bevorzugt von 0,2 bis 1,5 mm, ganz besonders bevorzugt von 0,5 bis 1 mm, wobei eine mögliche Trägerplatte nicht berücksichtigt ist.

Vorzugsweise beträgt der Kontaktwinkel der gesamten Unterseite der Vertropferplatte gegenüber Wasser mindestens 60°. Die Vertropferplatte kann aber auch vollständig aus einem Material bestehen, dass gegenüber Wasser einen Kontaktwinkel von mindestens 60° aufweist.

Der Kontaktwinkel gegenüber Wasser beträgt vorzugsweise mindestens 70°, besonders bevorzugt mindestens 80°, ganz besonders bevorzugt mindestens 90°.

Es ist aber auch möglich, dass die Vertropferplatte aus einem Material mit einem niedrigeren Kontaktwinkel gegenüber Wasser besteht, beispielsweise einem Stahl mit der Werkstoffnummer 1.4571, und mit einem Material mit einem größeren Kontaktwinkel gegenüber Wasser beschichtet wird.

Geeignete Beschichtungen sind beispielsweise fluorhaltige Polymere, wie Perfluoralkoxyethylen, Polytetrafluorethylen, Ethylen-Chlortrifluorethylen-Copolymere, Ethylen-Tetrafluorethylen-Copolymere und fluoriertes Polyethylen.

Das Mittel vi) umfasst beispielsweise einen Verdichter, inbesondere Ventilator, eine Mengenmessung und ein regelbares Ventil. Der Verdichter erhöht den Druck des Trägergases und ermöglicht so die Rückführung zur Trägergaszuführung iii). Über Mengenmessung und Ventil kann die rückgeführte Trägergasmenge eingestellt werden.

Das erfindungsgemäße Verfahren ermöglicht die Herstellung wasserabsorbierender Polymerpartikel mit besonders enger Partikelgrößenverteilung.

### Beispiele:

### Beispiel 1 (Vergleich)

12 kg Natriumacrylat (37,5 gew.-%ige Lösung in Wasser) und 1,1 kg Acrylsäure wurden mit 3 kg Wasser und 9 g 15-fach ethoxiliertem Trimethylolpropantriacrylat gemischt. Die Lösung wurde nach Zugabe von Initiatoren in einen erwärmten, mit Stickstoffatmosphäre gefüllten Sprühturm vertropft (170°C, 12m Höhe, 2m Breite, Gasgeschwindigkeit 0,1 m/s im Gleichstrom). Die Dosiergeschwindigkeit betrug 16 kg/h. Die Vertropferplatte wies 37 Bohrungen à 170 µm auf. Der Durchmesser der Vertropferplatte betrug 65 mm. Als Initiatoren wurden 2,2-Azobis[2-(2-imidazolin-2-yl)propan]dihydrochlorid und 2,2-Azobis(2-amidinopropan)dihydrochlorid verwendet. Die Konzentration der Initiatoren betrug jeweils 0,2 Gew.-%, bezogen auf das Monomer. Die Initiatoren wurden kurz vor dem Vertropfer in einer 2%igen wässrigen Lösung über einen statischen Mischer mit der Monomerlösung gemischt.

Damit die Vertropferplatte leichter ausgebaut und gereinigt werden konnte, lag die Vertropferplatte auf einer Trägerplatte (Düsenplatte). Die Trägerplatte wies, wie die Vertropferplatte, 37 Bohrungen auf, wobei die Bohrungen der Trägerplatte größer waren. Die Bohrungen der Trägerplatte waren so angeordnet, dass die Bohrungen der Trägerplatte mit den Bohrungen der Vertropferplatte zur Deckung kamen.

Die Trägerplatte war aus Edelstahl. Der Kontaktwinkel gegen Wasser betrug weniger als 10°.

Die Partikelgrößenverteilung der erhaltenen Polymerpartikel wurde mittels Laserbeugung bestimmt.

Der Anteil der Polymerpartikel mit einem Durchmesser von weniger als 100 µm betrug 2,3 Gew.-%.

Der Anteil der Polymerpartikel mit einem Durchmesser von weniger als 220 µm betrug 37 Gew.-%.

### Beispiel 2

### Es wurde verfahren wie unter Beispiel 1.

Die Trägerplatte wurde aber vor dem Versuch mit einem Fluoralkylacrylat-Copolymer beschichtet. Dazu wurde die Trägerplatte ausgebaut, 10 Minuten in eine 3 gew.-%ige Lösung von NUVA® FDS (Clariant, DE) eingetaucht und 30 Minuten bei 160°C im Trockenschrank getempert.

Der Kontaktwinkel der beschichteten Trägerplatte gegen Wasser betrug 116°. Der Kontaktwinkel der beschichteten Trägerplatte gegen die Monomerlösung betrug 93°.

Die Partikelgrößenverteilung der erhaltenen Polymerpartikel wurde mittels Laserbeugung bestimmt.

Der Anteil der Polymerpartikel mit einem Durchmesser von weniger als 100 µm betrug 0,2 Gew.-%.

Der Anteil der Polymerpartikel mit einem Durchmesser von weniger als 220 µm betrug 12 Gew.-%.

Das erfindungsgemäße Beispiel zeigt, dass der Anteil kleiner Partikel durch die Erhöhung des Kontaktwinkels gegenüber der Monomerlösung deutlich vermindert werden konnte.

## Patentansprüche

1. Verfahren zur Herstellung wasserabsorbierender Polymerpartikel durch Vertropfen wässriger Lösungen mittels einer Vertropferplatte und Polymerisation, **dadurch gekennzeichnet, dass** zumindest die Unterseite der Vertropferplatte zumindest teilweise gegenüber Wasser einen Kontaktwinkel von mindestens 60° aufweist und die vertropfte wässrige Lösung eine zu polymerisierende Monomerlösung ist.

2. Verfahren gemäß Anspruch 1, **dadurch gekennzeichnet, dass** die Vertropferplatte zumindest teilweise mit einem Material beschichtet ist oder aus einem Material besteht, das gegenüber Wasser einen Kontaktwinkel von mindestens 60° aufweist.

3. Verfahren gemäß Anspruch 2, **dadurch gekennzeichnet, dass** das Material, das gegenüber Wasser einen Kontaktwinkel von mindestens 60° aufweist, ein fluorhaltiges Polymer ist.

4. Verfahren gemäß einem der Ansprüche 1 bis 3, **dadurch gekennzeichnet, dass** eine Vertropferplatte verwendet wird, deren Bohrungen einen Durchmesser von 50 bis 1.000 µm aufweisen.

5. Verfahren gemäß einem der Ansprüche 1 bis 4, **dadurch gekennzeichnet, dass** die Monomerlösung eine Lösung ist, die eine teilneutralisierte wässrige Acrylsäure enthält.

6. Verfahren gemäß einem der Ansprüche 1 bis 5, **dadurch gekennzeichnet, dass** der Reaktor, in den vertropft wird, eine Temperatur von 70 bis 250°C aufweist.

7. Verfahren gemäß einem Ansprüche 1 bis 6, **dadurch gekennzeichnet, dass** in eine Inertgasatmosphäre vertropft wird.

8. Verfahren zur Herstellung von Hygieneartikeln, umfassend die Verwendung gemäß Anspruch 7 hergestellter wasserabsorbierender Polymerpartikel.

9. Reaktor zur Herstellung von Polymerpartikeln, umfassend
i) einen beheizbaren Reaktionsraum,
ii) mindestens eine Vertropferplatte zur Tropfenerzeugung im oberen Bereich des Reaktionsraumes i),
iii) mindestens eine Trägergaszuführung,
iv) mindestens eine Trägergasvorheizung und
v) mindestens eine Trägergasabführung,
wobei zumindest die Unterseite der Vertropferplatte zumindest teilweise gegenüber Wasser einen Kontaktwinkel von mindestens 60° aufweist.

10. Reaktor gemäß Anspruch 9, **dadurch gekennzeichnet, dass** die Vertropferplatte mit einem Material beschichtet ist oder aus einem Material besteht, das gegenüber Wasser einen Kontaktwinkel von mindestens 60° aufweist.

11. Reaktor gemäß Anspruch 10, **dadurch gekennzeichnet, dass** das Material, das gegenüber Wasser einen Kontaktwinkel von mindestens 60° aufweist, ein fluorhaltiges Polymer ist

12. Reaktor gemäß einem der Ansprüche 9 bis 11, **dadurch gekennzeichnet, dass** die Vertropferplatte Bohrungen mit einen Durchmesser von 50 bis 1.000 µm aufweist.

## Claims

1. A process for producing water-absorbing polymeric particles by dropletizing aqueous solutions by means of a dropletizer plate and polymerization wherein at least the underside of the dropletizer plate has at least in part a contact angle of at least 60° with regard to water and the dropletized aqueous solution is a monomer solution to be polymerized.

2. The process according to claim 1 wherein the dropletizer plate at least in part is coated with or consists of a material having a contact angle of at least 60° with regard to water.

3. The process according to claim 2 wherein the material having a contact angle of at least 60° with regard to water is a fluorous polymer.

4. The process according to any one of claims 1 to 3 that utilizes a dropletizer plate whose drilled holes have a diameter in the range from 50 to 1000 µm.

5. The process according to any one of claims 1 to 4 wherein the monomer solution is a solution comprising a partially neutralized aqueous acrylic acid.

6. The process according to any one of claims 1 to 5 wherein the reactor into which the liquid is dropletized has a temperature in the range from 70 to 250°C.

7. The process according to any one of claims 1 to 6 wherein the liquid is dropletized into an inert gas atmosphere.

8. A process for producing hygiene articles which comprises the use of water-absorbing polymeric particles produced according to claim 7.

9. A reactor for producing polymer particles, said reactor comprising
i. a heatable reaction space,
ii. at least one dropletizer plate for droplet generation in the upper region of the reaction space i,
iii. at least one carrier gas feed,
iv. at least one carrier gas preheater and
v. at least one carrier gas exit,
wherein at least the underside of the dropletizer plate has at least in part a contact angle of at least 60° with regard to water.

10. The reactor according to claim 9 wherein the dropletizer plate is coated with or consists of a material having a contact angle of at least 60° with regard to water.

11. The reactor according to claim 10 wherein the material having a contact angle of at least 60° with regard to water is a fluorous polymer.

12. The reactor according to any one of claims 9 to 11 wherein the dropletizer plate has drilled holes having a diameter in the range from 50 to 1000 µm.

## Revendications

1. Procédé de fabrication de particules polymères absorbant l'eau par mise en gouttes de solutions aqueuses au moyen d'une plaque de formation de gouttes et polymérisation, **caractérisé en ce qu'**au moins le côté inférieur de la plaque de formation de gouttes présente au moins en partie un angle de contact avec l'eau d'au moins 60°, et la solution aqueuse mise en gouttes est une solution de monomères à polymériser.

2. Procédé selon la revendication 1, **caractérisé en ce que** la plaque de formation de gouttes est au moins partiellement revêtue avec un matériau ou est constituée par un matériau qui présente un angle de contact avec l'eau d'au moins 60°.

3. Procédé selon la revendication 2, **caractérisé en ce que** le matériau qui présente un angle de contact avec l'eau d'au moins 60° est un polymère fluoré.

4. Procédé selon l'une quelconque des revendications 1 à 3, **caractérisé en ce qu'**une plaque de formation de gouttes dont les trous présentent un diamètre de 50 à 1 000 µm est utilisée.

5. Procédé selon l'une quelconque des revendications 1 à 4, **caractérisé en ce que** la solution de monomères est une solution qui contient un acide acrylique aqueux partiellement neutralisé.

6. Procédé selon l'une quelconque des revendications 1 à 5, **caractérisé en ce que** le réacteur dans lequel la mise en gouttes a lieu présente une température de 70 à 250 °C.

7. Procédé selon l'une quelconque des revendications 1 à 6, **caractérisé en ce que** la mise en gouttes a lieu dans une atmosphère de gaz inerte.

8. Procédé de fabrication d'articles d'hygiène, comprenant l'utilisation de particules polymères absorbant l'eau fabriquées selon la revendication 7.

9. Réacteur pour la fabrication de particules polymères, comprenant :
i) une chambre de réaction pouvant être chauffée,
ii) au moins une plaque de formation de gouttes pour la formation de gouttes dans la zone supérieure de la chambre de réaction i),
iii) au moins une conduite d'alimentation en gaz vecteur,
iv) au moins un dispositif de préchauffage du gaz vecteur et
v) au moins une conduite d'évacuation du gaz vecteur, au moins le côté inférieur de la plaque de formation de gouttes présentant au moins en partie un angle de contact avec l'eau de 60°.

10. Réacteur selon la revendication 9, **caractérisé en ce que** la plaque de formation de gouttes est revêtue avec un matériau ou est constituée par un matériau qui présente un angle de contact avec l'eau d'au moins 60°.

11. Réacteur selon la revendication 10, **caractérisé en ce que** le matériau qui présente un angle de contact avec l'eau d'au moins 60° est un polymère fluoré.

12. Réacteur selon l'une quelconque des revendications 9 à 11, **caractérisé en ce que** la plaque de formation de gouttes présente des trous ayant un diamètre de 50 à 1 000 µm.
